# EUROPEAN PATENT SPECIFICATION

(11) **EP 3 188 874 B1**
(45) Date of publication and mention of the grant of the patent: **30.10.2019**
(21) Application number: 14758397.5
(22) Date of filing: 01.09.2014
(51) Int. Cl.: B23K 26/06, B23K 26/067, B23K 26/073, B23K 26/20, H01M 2/04

(54) **SYSTEM FOR AND METHOD OF WELDING WITH A LASER BEAM POINT LINEAR PROFILE OBLIQUELY ORIENTED RELATIVE TO THE TRAVEL DIRECTION**
SYSTEM UND VERFAHREN ZUM SCHWEISSEN MIT EINEM LASERSTRAHLPUNKTLINEARPROFIL, DAS IN BEZUG AUF DIE BEWEGUNGSRICHTUNG SCHRÄG AUSGERICHTET IST
SYSTÈME POUR ET PROCÉDÉ DE SOUDAGE AVEC UN PROFIL LINÉAIRE DE POINTAGE DE FAISCEAU LASER ORIENTÉ OBLIQUEMENT PAR RAPPORT À LA DIRECTION DE DÉPLACEMENT

(43) Date of publication of application: 12.07.2017
(73) Proprietor: Toyota Motor Europe, 1140 Brussels (BE)
(72) Inventor: TSUKUI, Akira, B- 1200 Woluwe-Saint-Lambert (BE)
(74) Representative: Cabinet Beau de Loménie
(86) International application number: PCT/EP2014/068535
(87) International publication number: WO 2016/034204

(56) References cited:
- CN-A- 102 500 922
- DE-A1-102004 050 819
- JP-A- 2001 338 622
- JP-A- 2003 346 742
- US-A- 5 155 323
- US-A- 5 690 845
- US-A1- 2004 118 818
- US-A1- 2004 200 813

## Description

### Field of the Disclosure

The present disclosure is related to systems and methods for welding, and more particularly to laser welding system and a method of laser welding according to the preamble of claims 1 and 8 (see, for example, US2004/118818 A1), using optical elements to form multiple heat source points.

### Background of the Disclosure

In manufacturing of electronic devices, e.g., batteries, fuel cells, etc., component design often involves various pieces (e.g., two or more thin metal sheets) being assembled together by welding.

Typically, metal sheets are positioned together and placed on a welding support. A welding device (e.g., laser, electron beam/plasma, arc-welder, and/or other similar devices) can then be used to perform a welding operation.

For example, when enclosing a lithium-ion battery within a case and cover, the inner portion of the battery may be assembled or placed within the case, the cover put in place, and a laser welding operation carried out to affix the case and cover to seal closed the battery.

However, in some circumstances, where laser energy enters the inner portions of the battery, undesirable effects can occur (e.g., damage to an electrode). In addition, it is possible that the welding operation does not completely seal the case to the cover, and therefore problems can occur.

According to some available techniques, a laser beam is used to create five or more heat source points in a symmetric profile using optical elements (e.g., diffractive optical elements), and a welding operation carried out with the resulting multi-point profile. For example, a configuration wherein a primary heat source point is created in a center portion surrounded at four corners by sub heat source points, thereby forming a rectangular profile. See for example, Japanese patent application JP2014123850 filed June 16, 2014. US 2004/118818 discloses a laser beam welding method and apparatus. CN 10 250 0922 discloses a method for light alloy welding and multi-pass system.

### SUMMARY OF THE DISCLOSURE

Configurations described above generally involve implementation of a laser oscillator of sufficiently high power to create five or more welding beams, and this can consume energy at a rate that may not be desirable in view of energy and production costs. In addition, a laser oscillator of sufficiently high power capacity can be costly to obtain.

Moreover, in such configurations ghost laser beams can result in various patterns around the heat source points, thereby increasing the probability that laser energy will enter the inner portions of the battery and cause undesirable effects.

It has been determined that prior systems lack an effective and efficient system for welding where a reduction in both power and undesirable effect probability can be achieved. It is accordingly a primary object of the disclosure to provide systems and methods that overcome the deficiencies of the currently available systems and methods.

According to embodiments of the present disclosure, a laser welding system according to claim 1 is provided.

By implementing such a system according to the present disclosure, laser welding can be accomplished at reduced energy consumption, higher accuracy, and with reduced ghost beam production, thereby lowering risk for undesirable effects to internal parts of a target being welded.

The beam modifying means can include a diffractive optical element, for example, a diffraction grating.

The at least two heat source points may include at least three heat source points, the at least three heat source points comprising two or more subsidiary heat source points, and at least one primary heat source point positioned between the two or more subsidiary heat source points, the at least one primary heat source point preferably having higher power than the subsidiary heat source points.

Importantly, beam modifying means may include a beam shaping means, e.g., to form a desired configuration of heat source points.

The impingement means comprises a gas supply device configured to supply gas, preferably an inert combustion inhibiting gas, and can be configured to apply the force in a direction from outside the target toward an inner portion of the target.

According to embodiments of the present disclosure, the beam modifying means can be configured to split the laser beam into no more than five output beams, preferably no more than three output beams.

As a target, one suitable example includes an elongate battery case and cover, preferably for a lithium ion battery. In such an example, a majority of the at least one primary heat source point can irradiate the battery case, with only a small portion irradiating the cover, at least during welding of longitudinal portions of the elongate battery case and cover.

The primary heat source point can preferably be located in proximity to a midpoint of the linear profile.

According to further embodiments of the present disclosure, a method for welding according to claim 8 is provided.

By practicing a method according to embodiments of the present disclosure, laser welding can be accomplished at reduced energy consumption and with reduced risk of undesirable effects on the internal target.

Directing of the heat source points may include manipulating one or more optical elements such that the split laser beams are reflected, for example, towards a target. In such embodiments, the optical elements may be part of, for example, a galvanoscanner and may comprise mirrors, lenses, and/or any other suitable optical element.

The applying may include directing a supply of gas from outside the target toward an inner portion of the target, and the gas may preferably include an inert combustion-inhibiting gas.

The split laser can be directed to result in the at least one primary output beam forming a primary heat source point between two subsidiary heat source points, for example at a midpoint between the two subsidiary heat source points.

When welding an end portion of an elongate battery case and cover, a majority of the at least one primary heat source point may preferably be positioned over a gap to be closed by welding during the moving, and when welding an elongate portion of the elongate battery case and cover, a majority of the at least one primary heat source point may be positioned over the case.

According to some embodiments, the splitting results in no more than five output beams, and in some cases, preferably no more than three output beams.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, serve to explain the principles thereof.

### BRIEF DESCRIPTION OF THE DRAWINGS

Figure 1A shows a prior art welding profile;
Figure 1B is a diagram showing a scanning technique for welding using the welding profile of Figure 1A;
Figure 2A shows an exemplary welding system according to embodiments of the present disclosure;
Figure 2B is an exemplary representation of a target in proximity to the welding system shown at Figure 2A;
Figures 3A-C are exemplary linear profiles of heat source points according to embodiments of the present disclosure;
Figure 4 is an exemplary linear profile at a particular orientation formed using a beam shaper;
Figure 5 is a diagram representing exemplary positioning of a linear profile relative to a target during a welding operation;
Figures 6A-F show a representation of sequential steps in an exemplary welding process; and
Figure 7 is a block diagram describing an exemplary method according to embodiments of the present disclosure.

### DESCRIPTION OF THE EMBODIMENTS

Reference will now be made in detail to exemplary embodiments of the disclosure, examples of which are illustrated in the accompanying drawings. Wherever possible, the same reference numbers will be used throughout the drawings to refer to the same or like parts.

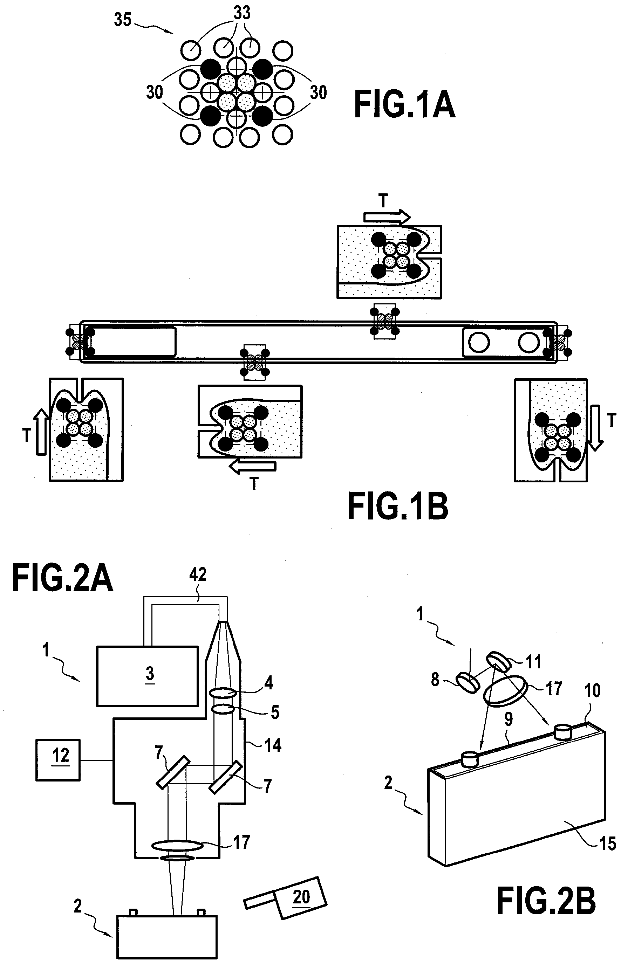

Figure 1A shows a prior art welding profile, while Figure 1B is a diagram showing a scanning technique for welding using the welding profile of Figure 1A. As described above, at least five heat source points 30 have been used in prior art systems, and this can result in excess energy consumption, as well as production of various undesirable "ghost beams" 33.

When scanning the weld line using the profile 35 of Figure 1A, as shown at Figure 1B, it is possible that ghost beams 33 may pass between the gap to be welded and enter the internal portion of the target 2. This can lead to undesirable effects.

Figure 2A shows an exemplary welding system 1 configured to remedy the above problems according to embodiments of the present disclosure while Figure 2B is an exemplary representation of a target in proximity to the welding system shown at Figure 2A. Welding system 1 may include a laser source 3, a collimator 4, a beam modifier 5 (e.g., a diffractive optical element (DOE)), a directing unit 14, a gas supply 20, and a controller 12. One of skill in the art will understand that more or fewer components may be present without departing from the scope of the present disclosure.

Laser source 3 includes any suitable device for providing a laser beam, for example, a laser oscillator. Laser source 3 may provide laser light at any wavelength and energy level suitable for welding materials associated with target 2. For example, suitable laser sources include, ruby lasers, Nd:YAG lasers, fiber lasers, gas lasers (helium, nitrogen, carbon dioxide), etc.

Collimator 4 may be optionally provided and can be configured to collimate laser light provided by laser source 3. For example, laser light provided by laser source 3 may pass through a delivery medium 42 (e.g., optical fiber) to arrive at a desired location. Upon exiting delivery medium 42, the laser light may be collimated to desirably align the light waves and narrow the beam before passing through additional optical elements, e.g., beam modifier 5. Collimator 4 may therefore be any lens, mirror, or other suitable element for collimating laser light.

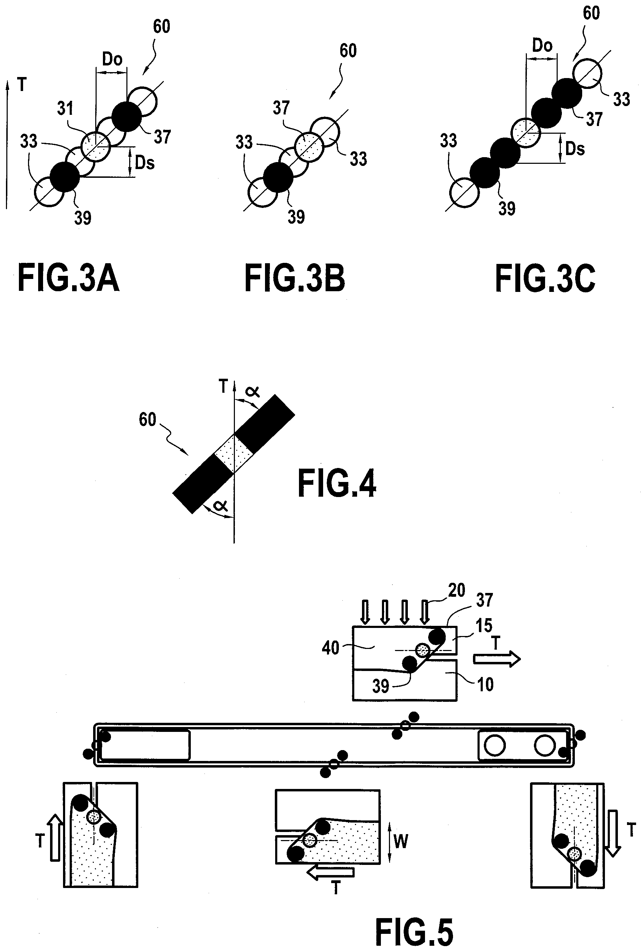

Figures 3A-C are exemplary linear profiles of heat source points according to embodiments of the present disclosure. Beam modifier 5 may comprise one or more optical elements configured to split a laser beam provided by laser source 3 into a desired number of output laser beams and to shape the output laser beams into a desired profile. For example, beam modifier 5 may comprise a diffraction element (e.g., a diffraction grating) fabricated to function as a beam splitter to split an incident laser beam provided by laser source 3 into five or fewer output laser beams.

In addition, beam modifier 5 may comprise a beam shaper configured to arrange the output beams to form a linear profile, i.e., the heat source points 30 resulting from incidence upon target 2 being aligned linearly as shown at Figures 3A-C. For example, one suitable beam shaper may be an FBS - Gauss- to-Top Hat Focus Beam Shaper by TOPAG. One of skill in the art will recognize that this device is exemplary only.

Importantly, when discussing the output beams resulting from the split laser beam, any resulting higher order diffraction beams referred to as "ghost beams 33" (i.e.,) are not to be taken into consideration. In other words, "output beam(s)" is used to refer to the intended output of beam modifier 5, and not unintended ghost beams 33 formed as a result of splitting the laser beam using beam modifier 5.

Heat source points 30 resulting from output beams of beam modifier 5 may have greater or lesser incident power based on, for example, a diffractive order associated with each of heat source points 30 and diffraction efficiency of beam modifier 5, among others. For example, a primary heat source point 31 having a diffractive order of 0 may be positioned between two or more subsidiary heat source points 32 having a diffractive order greater than 0 (e.g., 1, 2, etc.) (e.g., at a midpoint of the linear profile).

Returning to Figures 2A-B, directing unit 14 is configured to perform scanning, i.e., directing of one or more output laser beams to a desired location to perform a welding operation. Therefore, directing unit 14 may include a controller 12 and one or more optical elements 7 configured to direct one or more laser beams to and along a weld line 9 of target 2.

Importantly, while controller 12 is discussed within the context of directing unit 14, one of skill in the art will recognize that controller 12 may be integrated with directing unit 14 (i.e., a single structure) or may be provided separately from directing unit 14. One of skill will further recognize that portions of controller 12 may be present with directing unit 14 while other portions of controller 12 are implemented at a location remote from directing unit 14. Any such configurations are intended to be covered by the present disclosure.

Controller 12 may comprise any suitable control device capable of generating and sending commands to directing device 14 to accomplish a desired welding task. For example, controller 12 may comprise a PIC based controller, a RISC based controller, etc. Controller 12 may further be configured to interface with one or more networks, e.g., LAN, WAN, Internet, cellular, etc. so as to receive instructions via the network.

According to embodiments of the present disclosure, one exemplary directing unit 14 and controller 12 combination may comprise a Galvanoscanner, such as, for example, a MIRAMOTION (Y-E data). This exemplary device is not intended to be limiting, however, and any other suitable device may be implemented.

Optical elements 7 may include, for example, one or more mirrors, half mirrors, lenses, mirrored lenses, fibers, etc. suitable for manipulating light. For example, optical elements 7 may include a first mirror 8 positioned at a 45 degree angle relative to a laser beam so as to reflect light perpendicular to the incident laser beam. A scanning mirror 11 may also be provided and configured to direct the laser beam resulting from first mirror 8 in a travel direction T along weld line 9 of target 2. One of skill will recognize that the described configuration is exemplary only, and that more or fewer optical components 7 may be present. For example, one or more lenses 17 and protective coverings may be present to focus output laser beams.

In addition, directing unit 14 may comprise one or more elements designed to manipulate optical elements 7 in an automated manner. For example, one or more servo motors (not shown) may be provided and configured to rotate, and/or otherwise manipulate optical elements 7 (e.g., scanning mirror 11) so as to perform a desired scanning operation during welding.

Figure 4 is an exemplary linear profile at a particular orientation formed using, for example, a beam shaper. Such a linear profile may be manipulated by directing unit 14 controlled by controller 12, for example, based on predetermined instructions programmed within controller 12.

Directing unit 14 may also be configured to orient linear profile 60 associated with output laser beams and heat source points 30, for example, during scanning. As noted, during scanning, directing unit 14 is configured to cause heat source points 30 to travel along a weld line 9 of target 2. During such movement, directing unit 14 may orient linear profile 60 of heat source points 30 at an predetermined oblique angle α relative to the direction of travel T (i.e., movement direction) along weld line 9 of target 2. As used herein, "travel direction" is intended to mean the direction of movement of heat source points 30 along a weld line 9 of target 2 as directed by directing unit 14.

Because the linear profile of heat source points 30 forms oblique angle α relative to the travel direction T, a leading heat source point 37 and a trailing heat source point 39 may be present, with one or more additional heat source points 30 (e.g., primary heat source point 31) located between leading heat source point 37 and trailing heat source point 39. Therefore, each heat source point 30 has a separation distance D_{S} as measured along the travel direction T of the linear profile from a previous or subsequent heat source point 30, as well as an offset distance D_{O} relative to a previous or subsequent heat source point 30 as measured perpendicular to the travel direction T, as shown at Figures 3A-C.

Figure 5 is a diagram representing exemplary positioning of a linear profile relative to a target during a welding operation. As shown, as linear profile 60 of heat source points 30 travels along weld line 9 of target 2, leading heat source point 37 is incident upon a portion of target 2 forming a portion of melt pool 40, followed in time by, for example, primary heat source point 31, at an offset distance D_{O} from the first portion by a function of angle α (i.e., D_{O}=D_{S}/Tan α), and finally by trailing heat source point 39.

Such a configuration allows leading heat source point 37 to irradiate and heat a portion of target 2 to begin formation of melt pool 40 (e.g., to begin melting material associated with target 2), followed at separation distance D_{S} by a subsequent heat source point 30 (e.g., primary heat source point 31), the subsequent heat source point 30 irradiating and heating at offset distance D_{O} in an overlapping manner within melt pool 40 formed by leading heat source point 37, and thereby further expanding a width W of melt pool 40. Such an expansion of melt pool 40 continues until passage of trailing heat source point 39.

According to embodiments of the present disclosure, during welding of an elongate portion of target 2, the linear profile of heat source points 30 may be arranged at an angle α between about 20 and 80 degrees relative to the direction of travel T of heat source points 30 along the weld line 9 of target 2. Further, during welding of such an elongate portion, it may be desirable to position linear profile 60 of heat source points 30 such that leading heat source point 37 irradiates a portion closest to the an outer portion of target 2 (i.e., an outboard portion of target 2). For example, where a battery case 15 and cover 10 comprise target 2, during welding of an elongate side of case 15 and cover 10, linear profile 60 of heat source points 30 can be arranged such that leading heat source point 37 irradiates a portion on case 15 while trailing heat source point 39 irradiates a portion on cover 10. Primary heat source point 31, positioned substantially at the center between trailing heat source point 39 and leading heat source point 37, may be positioned substantially over case 15 during such elongate portion welding.

Further, it may be desirable during welding of other portions of target 2 (e.g., end portions of battery case 15 and cover 10) to position linear profile 60 of heat source points 30 such that leading heat source point 37 irradiates a portion of cover 10 (i.e., an inboard portion of target 2), while trailing heat source point 39 irradiates a portion of case 15. One of skill in the art will recognize that the configuration described above is exemplary only and multiple such configurations are available depending on, e.g., target 2, desired melt pool 40, etc. In addition, oblique angle α may also be varied based on a position along weld line 9 of target 2. Any such configuration is intended to fall within the scope of the present disclosure.

Gas supply 20 is configured to apply a force to at least a portion of target 2 heated by heat source points 30. Therefore, gas supply may be configured to move in travel direction T along with linear profile 60 during a welding operation, e.g., based on commands from controller 12 to a servo motor operatively connected to gas supply 20.

According to some embodiments, a force applied by gas supply 20 may be directed from a region outside target 2 towards an inner region of target 2. For example, where target 2 comprises a case 15 and cover 10 for a battery, gas supply 20 may cause a force to be applied in a direction from case 15 toward cover 10 as shown at Figure 5.

Gas supply 20 may include one or more nozzles, diffusers, and/or other suitable devices for creating, for example, a gas jet that may impinge upon target 2 at least at a portion where melt pool 40 remains substantially fluid. According to some embodiments, gas supply 20 may include a supply of compressed gas (not shown), e.g., an inert combustion-inhibiting gas (e.g., CO₂) that when decompressed through a nozzle may provide a gas jet configured to exert force on melt pool 40 formed by heat source points 30 on target 2. By exerting such a force, a portion of the molten material in melt pool 40 may be caused to flow, for example, in a direction from case 15 toward cover 10. Such flow may therefore assist in closing a gap to be welded and may further strengthen the weld. Because the gap may be closed as a result of the flowed molten material, the risk of subsequent heat source points 30 entering internal portions of the battery is significantly reduced.

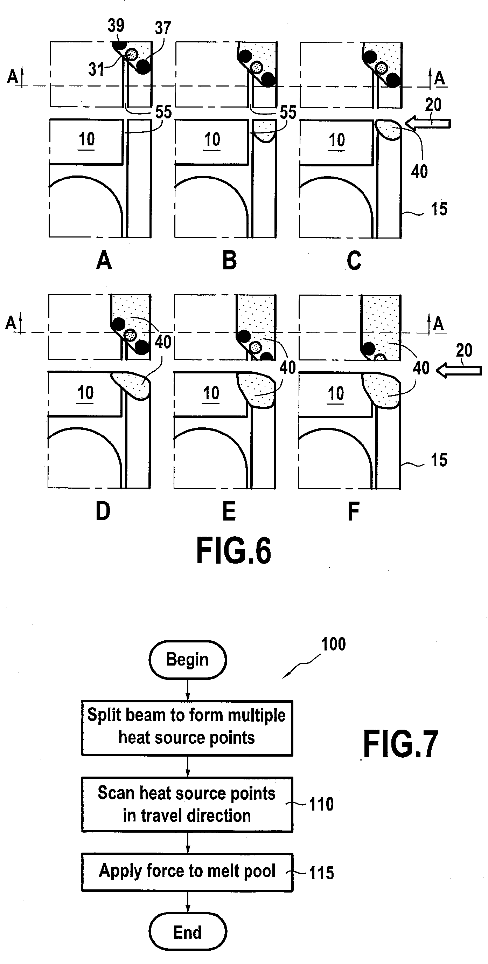

Figures 6A-F shows top and cross-sectional representations along plane AA of an exemplary welding process according to embodiments of the present disclosure. As shown at Figure 6A, prior to scanning by heat source points 30, a gap 55 exists between a case 15 and cover 10 of a battery. As leading heat source point 37 passes over position AA of target 2 (e.g., case 15), a melt pool 40 begins to form as shown at Figure 6B. Gas supply 20 then exerts a force upon melt pool 40 to cause flow of melt pool 40 toward gap 55 as shown at Figure 6C. Scanning continues and primary heat source point 31 irradiates at AA at offset D_{O} thereby further enlarging melt pool 40, and as shown at Figure 6D, gas supply 20 continues to exert force to cause melt pool 40 to flow. Scanning continues and trailing heat source point 39 arrives at position AA at offset D_{O}' thereby continuing enlargement of melt pool 40, as gas supply 20 continues to exert force as shown at Figure 6E. Finally, as shown at Figure 6F the welding process is complete at position AA and gap 55 has been closed.

Figure 7 is a flow chart 100 demonstrating an exemplary method for laser welding according to embodiments of the present disclosure. A laser beam may initially be split into several output laser beams so as to create at least two heat source points 30 on target 2 (step 105). As noted above heat source points 30 may form a linear profile.

Heat source points 30 may then be directed in a travel direction along a weld line 40 of target 2 (step 110). During such directing, linear profile 60 formed by heat source points 30 may maintain a predetermined, oblique angle α relative to travel direction T.

As heat source points 30 irradiate a portion of target 2, a force may be applied to weld pool 40 on target 2 in an area heated by at least one of the heat source points 30 (step 115). As noted above, such a force may be exerted by a gas stream, e.g., gas supply 20, or any other suitable manner.

One of skill in the art will recognize that variations may be made to structures and methods described herein. For example, while exemplary embodiments have been discussed using a leading heat source point 37, primary heat source point 31, and trailing heat source point 39, additional heat source points 30 may be provided as desired, for example where width of target 2 renders welding difficult without additional heat source points 30.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Where any standards of national, international, or other standards body are referenced (e.g., ISO, etc.), such references are intended to refer to the standard as defined by the national or international standards body as of the priority date of the present specification. Any subsequent substantive changes to such standards are not intended to modify the scope and/or definitions of the present disclosure and/or claims.

Although the present disclosure herein has been described with reference to particular embodiments, it is to be understood that these embodiments are merely illustrative of the principles and applications of the present invention as defined in the appended claims.

## Claims

1. A laser welding system (1), comprising:
a laser source (3) configured to produce at least one laser beam; beam modifying means (5), preferably a diffractive optical element, configured to split the at least one laser beam;
directing means (14);
optionally, impingement means (20) configured to apply a force to a target (2);
and **characterised by** :
controlling means (12) configured to control the directing means (14) to: cause the split laser beam to form at least three heat source points (30) on the target (2), the at least three heat source points (30) comprising two or more subsidiary heat source points (32), and at least one primary heat source (31) point positioned between the two or more subsidiary heat source points (32), the at least one primary heat source point (31) having higher power than the subsidiary heat source points (32), the heat source points (30) maintaining a linear profile (60), and
move the at least three heat source points (30) in a travel direction along the target (2), wherein the linear profile (60) forms a predetermined, oblique angle (α) relative to the travel direction.

2. The laser welding system (1) according to claim 1, comprising the impingement means (20) configured to apply a force to a target (2), wherein the controlling means (12) is configured to control the impingement means (20) such that a force is applied to at least a portion of the target (2) heated by at least one of the at least three heat source points (30).

3. The laser welding system (1) according to any of claims 1-2, wherein the impingement means (20) comprises a gas supply device configured to supply gas, preferably an inert combustion inhibiting gas, and wherein the force is preferably applied in a direction from outside the target (2) toward an inner portion of the target (2).

4. The laser welding system (1) according to any of the previous claims wherein the beam modifying means (5) is configured to split the laser beam into no more than five output beams, preferably no more than three output beams.

5. The laser welding system (1) according to any of the previous claims in combination with a target (2),
wherein the target (2) comprises an elongate battery case (15) and cover (10), preferably for a lithium ion battery.

6. The laser welding system (1) according to claims 1 and 5, wherein a majority of the at least one primary heat source point (31) irradiates the battery case (15), at least during welding of longitudinal portions of the elongate battery case (15) and cover (10).

7. The laser welding system (1) according to any of claims 1-6, wherein the primary heat source point (31) is located in proximity to a midpoint of the linear profile.

8. A method for welding, the method being **characterised by** the following steps :
splitting a laser beam to form at least three heat source points (30) on a target (2), the at least three heat source points (30) comprising at least one primary heat source point (31) positioned between at least two subsidiary heat source points (32), the at least one primary heat source (31) point having higher power than the at least two subsidiary heat source points (32), the heat source points (30) maintaining a linear profile (60);
directing the at least three heat source points (30) in a travel direction along the target (2), wherein the linear profile (60) forms a predetermined, oblique angle (α) relative to the travel direction.

9. The method according to claim 8, comprising applying a force to the target (2) on at least a portion of an area on the target (2) heated by at least one of the at least three heat source points (30), preferably by directing a jet of gas from outside the target (2) toward an inner portion of the target (2), the gas preferably comprising an inert combustion-inhibiting gas.

10. The method according to any of claims 8 to 9, wherein the directing comprises manipulating one or more optical elements (4; 5; 7) such that the split laser beams are reflected.

11. The method according to claim 10, wherein the directing results in the at least one primary output beam forming a primary heat source point (31) between two subsidiary heat source points (32).

12. The method according to claim 11, further comprising:
when welding an end portion of an elongate battery case (15) and cover (10), positioning a majority of the at least one primary heat source point (31) over a gap to be closed by welding during the moving; and
when welding an elongate portion of the elongate battery case (15) and cover (10), positioning a majority of the at least one primary heat source point (31) over the case (15).

13. The method for welding according to any of claims 8-10, wherein the splitting results in no more than five output beams.

## Patentansprüche

1. Laserschweißsystem (1), umfassend:
eine Laserquelle (3), die dazu ausgestaltet ist, mindestens einen Laserstrahl zu produzieren,
ein Strahlmodifizierungsmittel (5), vorzugsweise ein optisches Beugungselement, das dazu ausgestaltet ist, den mindestens einen Laserstrahl zu teilen,
ein Lenkungsmittel (14),
optimal ein Beaufschlagungsmittel (20), das dazu ausgestaltet ist, eine Kraft auf ein Ziel (2) anzuwenden,
und **gekennzeichnet durch**:
ein Steuerungsmittel (12), das dazu ausgestaltet ist, das Lenkungsmittel (14) zu steuern, um:
zu bewirken, dass der geteilte Laserstrahl mindestens drei Wärmequellpunkte (30) auf dem Ziel (2) bildet, wobei die mindestens drei Wärmequellpunkte (30) zwei oder mehr sekundäre Wärmequellpunkte (32) und mindestens einen primären Wärmequellpunkt (31) umfassen, der zwischen den zwei oder mehr sekundären Wärmequellpunkten (32) positioniert ist, wobei der mindestens eine primäre Wärmequellpunkt (31) eine höhere Energie als die sekundären Wärmequellpunkte (32) aufweist, wobei die Wärmequellpunkte (30) ein lineares Profil (60) beibehalten, und
die mindestens drei Wärmequellpunkte (30) in einer Bewegungsrichtung entlang des Ziels (2) zu bewegen, wobei das lineare Profil (60) einen vorbestimmten schrägen Winkel (α) relativ zur Bewegungsrichtung bildet.

2. Laserschweißsystem (1) nach Anspruch 1, welches das Beaufschlagungsmittel (20) umfasst, das dazu ausgestaltet ist, eine Kraft auf ein Ziel (2) anzuwenden, wobei das Steuerungsmittel (12) dazu ausgestaltet ist, das Beaufschlagungsmittel (20) derart zu steuern, dass eine Kraft auf mindestens einen Abschnitt des Ziels (2) angewandt wird, das durch mindestens einen von den mindestens drei Wärmequellpunkten (30) erwärmt wird.

3. Laserschweißsystem (1) nach einem der Ansprüche 1 - 2, wobei das Beaufschlagungsmittel (20) eine Gaszufuhrvorrichtung umfasst, die dazu ausgestaltet ist, Gas, vorzugsweise ein inertes verbrennungshemmendes Gas, zuzuführen, und wobei die Kraft vorzugsweise in einer Richtung von außerhalb des Zieles (2) hin zu einem inneren Abschnitt des Zieles (2) angewandt wird.

4. Laserschweißsystem (1) nach einem der vorhergehenden Ansprüche, wobei das Strahlmodifizierungsmittel (5) dazu ausgestaltet ist, den Laserstrahl in nicht mehr als fünf Ausgangsstrahlen, vorzugsweise nicht mehr als drei Ausgangsstrahlen, zu teilen.

5. Laserschweißsystem (1) nach einem der vorhergehenden Ansprüche in Verbindung mit einem Ziel (2), wobei das Ziel (2) ein längliches Batteriegehäuse (15) und eine Abdeckung (10), vorzugsweise für eine Lithiumionenbatterie, umfasst.

6. Laserschweißsystem (1) nach Anspruch 1 und 5, wobei ein Großteil von dem mindestens einen primären Wärmequellpunkt (31) das Batteriegehäuse (15) zumindest während des Schweißens von Längsabschnitten des länglichen Batteriegehäuses (15) und der Abdeckung (10) bestrahlt.

7. Laserschweißsystem (1) nach einem der Ansprüche 1 - 6, wobei der primäre Wärmequellpunkt (31) sich in der Nähe eines Mittelpunkts des linearen Profils befindet.

8. Schweißverfahren, wobei das Verfahren durch die folgenden Schritte gekennzeichnet ist:
Teilen eines Laserstrahls, um mindestens drei Wärmequellpunkte (30) auf einem Ziel (2) zu bilden, wobei die mindestens drei Wärmequellpunkte (30) mindestens einen primären Wärmequellpunkt (31) umfassen, der zwischen mindestens zwei sekundären Wärmequellpunkten (32) positioniert ist, wobei der mindestens eine primäre Wärmequellpunkt (31) eine höhere Energie aufweist als die mindestens zwei sekundären Wärmequellpunkte (32), wobei die Wärmequellpunkte (30) ein lineares Profil (60) beibehalten,
Lenken der mindestens drei Wärmequellpunkte (30) in einer Bewegungsrichtung entlang des Ziels (2), wobei das lineare Profil (60) einen vorbestimmten schrägen Winkel (α) relativ zur Bewegungsrichtung bildet.

9. Verfahren nach Anspruch 8, welches das Anwenden einer Kraft auf das Ziel (2) auf mindestens einem Abschnitt eines Bereichs auf dem Ziel (2) umfasst, der durch mindestens einen von den mindestens drei Wärmequellpunkten (30) erwärmt wird, vorzugsweise durch Lenken eines Gasstrahls von außerhalb des Ziels (2) hin zu einem inneren Abschnitt des Ziels (2), wobei das Gas vorzugsweise ein inertes verbrennungshemmendes Gas umfasst.

10. Verfahren nach einem der Ansprüche 8 bis 9, wobei das Lenken das Handhaben von einem oder mehreren optischen Elementen (4; 5; 7) umfasst, derart dass die geteilten Laserstrahlen reflektiert werden.

11. Verfahren nach Anspruch 10, wobei das Lenken ergibt, dass der mindestens eine primäre Ausgangsstrahl einen primäre Wärmequellpunkt (31) zwischen zwei sekundären Wärmequellpunkten (32) bildet.

12. Verfahren nach Anspruch 11, ferner umfassend:
beim Schweißen eines Endabschnitts eines länglichen Batteriegehäuses (15) und einer Abdeckung (10), Positionieren eines Großteils von dem mindestens einen primären Wärmequellpunkt (31) über einem durch Schweißen während der Bewegung zu schließenden Spalt, und
beim Schweißen eines länglichen Abschnitts des länglichen Batteriegehäuses (15) und der Abdeckung (10), Positionieren eines Großteils von dem mindestens einen primären Wärmequellpunkt (31) über dem Gehäuse (15).

13. Schweißverfahren nach einem der Ansprüche 8 - 10, wobei das Teilen nicht mehr als fünf Ausgangsstrahlen ergibt.

## Revendications

1. Système de soudage au laser (1), comprenant :
une source laser (3) configurée pour produire au moins un faisceau laser ;
des moyens de modification de faisceau (5), de préférence un élément optique diffractif, configurés pour diviser ledit au moins un faisceau laser ;
des moyens d'orientation (14) ;
en option, des moyens d'impact (20) configurés pour appliquer une force à une cible (2) ; et
**caractérisé par** :
des moyens de commande (12) configurés pour commander les moyens d'orientation (14) pour :
amener le faisceau laser divisé à former au moins trois points de source de chaleur (30) sur la cible (2), lesdits au moins trois points de source de chaleur (30) comprenant deux points de source de chaleur subsidiaires (32) ou plus, et au moins un point de source de chaleur principal (31) positionné entre lesdits deux points de source de chaleur subsidiaires (32) ou plus, ledit au moins un point de source de chaleur principal (31) ayant une puissance plus élevée que les points de source de chaleur subsidiaires (32), les points de source de chaleur (30) maintenant un profil linéaire (60), et
déplacer lesdits au moins trois points de source de chaleur (30) dans une direction de déplacement le long de la cible (2), dans lequel le profil linéaire (60) forme un angle oblique (α) prédéterminé par rapport à la direction de déplacement.

2. Système de soudage au laser (1) selon la revendication 1, comprenant les moyens d'impact (20) configurés pour appliquer une force à une cible (2), dans lequel les moyens de commande (12) sont configurés pour commander les moyens d'impact (20) de sorte qu'une force soit appliquée à au moins une partie de la cible (2) chauffée par au moins l'un desdits au moins trois points de source de chaleur (30).

3. Système de soudage au laser (1) selon l'une quelconque des revendications 1 et 2, dans lequel les moyens d'impact (20) comprennent un dispositif d'alimentation en gaz configuré pour fournir un gaz, de préférence un gaz inerte empêchant une combustion, et dans lequel la force est de préférence appliquée dans une direction de l'extérieur de la cible (2) vers une partie intérieure de la cible (2).

4. Système de soudage au laser (1) selon l'une quelconque des revendications précédentes, dans lequel les moyens de modification de faisceau (5) sont configurés pour diviser le faisceau laser en au plus cinq faisceaux de sortie, de préférence en au plus trois faisceaux de sortie.

5. Système de soudage au laser (1) selon l'une quelconque des revendications précédentes en combinaison avec une cible (2), dans lequel la cible (2) comprend un boîtier de batterie (15) et un capot (10) allongés, de préférence pour une batterie au lithium.

6. Système de soudage au laser (1) selon les revendications 1 et 5, dans lequel une majeure partie dudit au moins un point de source de chaleur principal (31) irradie le boîtier de batterie (15), au moins pendant le soudage des parties longitudinales du boîtier de batterie (15) et du capot (10) allongés.

7. Système de soudage au laser (1) selon l'une quelconque des revendications 1 à 6, dans lequel le point de source de chaleur principal (31) est situé à proximité d'un point central du profil linéaire.

8. Procédé de soudage, le procédé étant **caractérisé par** les étapes suivantes :
de division d'un faisceau laser pour former au moins trois points de source de chaleur (30) sur une cible (2), lesdits au moins trois points de source de chaleur (30) comprenant au moins un point de source de chaleur principal (31) positionné entre au moins deux points de source de chaleur subsidiaires (32), ledit au moins un point de source de chaleur principal (31) ayant une puissance plus élevée que lesdits au moins deux points de source de chaleur subsidiaires (32), les points de source de chaleur (30) maintenant un profil linéaire (60) ;
d'orientation desdits au moins trois points de source de chaleur (30) dans une direction de déplacement le long de la cible (2), dans lequel le profil linéaire (60) forme un angle oblique (α) prédéterminé par rapport à la direction de déplacement.

9. Procédé selon la revendication 8, comprenant l'application d'une force à la cible (2) sur au moins une partie d'une zone sur la cible (2) chauffée par au moins l'un desdits au moins trois points de source de chaleur (30), de préférence en dirigeant un jet de gaz de l'extérieur de la cible (2) vers une partie intérieure de la cible (2), le gaz comprenant de préférence un gaz inerte empêchant une combustion.

10. Procédé selon l'une quelconque des revendications 8 et 9, dans lequel l'orientation comprend la manipulation d'un ou de plusieurs éléments optiques (4 ; 5 ; 7) de sorte que les faisceaux laser divisés soient réfléchis.

11. Procédé selon la revendication 10, dans lequel l'orientation résulte en ce que ledit faisceau de sortie principal forme un point de source de chaleur principal (31) entre deux points de source de chaleur subsidiaires (32).

12. Procédé selon la revendication 11, comprenant en outre :
lors du soudage d'une partie d'extrémité d'un boîtier de batterie (15) et d'un capot (10) allongés, le positionnement d'une majeure partie dudit au moins un point de source de chaleur principal (31) sur un espace devant être fermé par soudage pendant le déplacement ; et
lors du soudage d'une partie allongée du boîtier de batterie (15) et du capot (10) allongés, le positionnement d'une majeure partie dudit au moins un point de source de chaleur principal (31) sur le boîtier (15).

13. Procédé de soudage selon l'une quelconque des revendications 8 à 10, dans lequel la division résulte en au plus cinq faisceaux de sortie.
